(19) Europäisches Patentamt
European Patent Office
Office européen des brevets

(11) **EP 4 657 740 A1**

(12) **EUROPEAN PATENT APPLICATION**
published in accordance with Art. 153(4) EPC

(43) Date of publication:
**03.12.2025 Bulletin 2025/49**

(21) Application number: **23918064.9**

(22) Date of filing: **25.01.2023**

(51) International Patent Classification (IPC):
**H02M 7/48** (2007.01)    **H02M 3/155** (2006.01)
**H02M 7/06** (2006.01)

(52) Cooperative Patent Classification (CPC):
**H02M 3/155; H02M 7/06; H02M 7/48**

(86) International application number:
**PCT/IB2023/000014**

(87) International publication number:
**WO 2024/157037 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Nissan Motor Co., Ltd.
Kanagawa 221-0023 (JP)**

• **Renault s.a.s
92100 Boulogne Billancourt (FR)**

(72) Inventors:
• **OKUBO, Akinori
Atsugi-shi, Kanagawa 243-0123 (JP)**
• **YAMAGAMI, Shigeharu
Atsugi-shi, Kanagawa 243-0123 (JP)**

(74) Representative: **Hoefer & Partner Patentanwälte
mbB
Pilgersheimer Straße 20
81543 München (DE)**

(54) **ELECTRIC POWER CONVERSION DEVICE**

(57)     A power conversion device includes: inductors (Lc1, Lc2) each of which having one end connected to a power supply terminal (P, N); a converter circuit (20) including input terminals (3, 4) each of which is connected to the other end of the inductor (Lc1, Lc2), a switch (Q1) connected between the input terminals (3, 4), and a resonance circuit (30); an X capacitor (Cx) connected between the input terminals (3, 4); and Y capacitors (Cy1, Cy2) each of which connected between each input terminal (3, 4) and an earth (E). A combined capacitance of the X capacitor (Cx) and the Y capacitors (Cy1, Cy2) constitutes a part of the converter circuit (20). The inductors (Lc1, Lc2) and the Y capacitors (Cy1, Cy2) constitute a filter circuit.

FIG. 1

EP 4 657 740 A1

## Description

TECHNICAL FIELD

The present invention relates to a power conversion device.

BACKGROUND ART

A power conversion device which performs power conversion using a switching element and LC resonance by an LC resonance circuit has been known in the past. A power conversion device of a conventional example disclosed in Patent Literature 1 converts, AC power having an effective voltage of 200 V and a low frequency such as a frequency of 50 Hz, into high-frequency AC power boosted by a class-E inverter circuit, using a switching element and LC resonance by an LC resonance circuit, for example. The power conversion device is what is referred to as a class E^2 power conversion device which rectifies the high-frequency AC power to DC power using a class-E rectifier circuit.

CITATION LIST

PATENT LITERATURE

Patent Literature 1: JP 2021-145433 A

SUMMARY OF INVENTION

PROBLEMS TO BE SOLVED BY INVENTION

Patent Literature 1 discloses that switching elements are operated at high frequencies to improve the efficiency of power conversion by operating the switching elements at resonance frequencies of a resonance circuit. Further, a voltage between the switching elements increases more than an input voltage, due to the voltage resonance of the resonance circuit. Therefore, the switching elements cause high-frequency and high-voltage electromagnetic noise. In order to eliminate the high-frequency and high-voltage electromagnetic noise, an increase in the number of stages of a noise filter is required. This causes an increase in size and cost of a circuit.

An object of the present invention is to provide a power conversion device, which can implement low loss due to zero voltage switching of a converter circuit, and which can achieve reduction in size and cost by reducing the number of stages of a noise filter by a noise suppression effect.

SOLUTION TO SOLVE PROBLEMS

A power conversion device according to one aspect of the present invention includes: a first inductor having one end connected to a first power supply terminal, and a second inductor having one end connected to a second power supply terminal; a converter circuit including a first input terminal connected to the other end of the first inductor, a second input terminal connected to the other end of the second inductor, a switch connected between the first input terminal and the second input terminal, and a resonance circuit; an X capacitor connected between the first input terminal and the second input terminal; and a first Y capacitor connected between the first input terminal and a ground, and a second Y capacitor connected between the second input terminal and the ground. The combined capacitance of the X capacitor, the first Y capacitor, and the second Y capacitor constitutes a part of the converter circuit. The first inductor and the first Y capacitor constitute a first filter circuit, and the second inductor and the second Y capacitor constitute a second filter circuit.

EFFECTS OF INVENTION

According to one aspect of the present invention, it is possible to provide a power conversion device, which can implement low loss due to zero voltage switching of a converter circuit, and which can achieve reduction in size and cost by reducing the number of stages of a noise filter by a noise suppression effect.

BRIEF DESCRIPTION OF THE DRAWINGS

[FIG. 1] FIG. 1 is a circuit diagram illustrating the configuration of a power conversion device according to a first embodiment.

[FIG. 2] FIG. 2 is a graph illustrating a drain current and a voltage at both ends of a switch of a converter circuit in the power conversion device according to the first embodiment.

[FIG. 3] FIG. 3 is a graph illustrating the magnitude of noise voltages of a switching frequency and harmonic frequencies thereof, and the filter performance of filter circuits constituted by a first inductor and a first X capacitor, and a second inductor and a second X capacitor, in the power conversion device according to the first embodiment.

[FIG. 4] FIG. 4 is a graph in which noise terminal voltages of the power conversion device according to the first embodiment and a power conversion device of a conventional example are compared.

[FIG. 5] FIG. 5 is a circuit diagram illustrating the configuration of a power conversion device according to a second embodiment.

[FIG. 6] FIG. 6 is a circuit diagram illustrating the configuration of a power conversion device according to a third embodiment.

[FIG. 7] FIG. 7 is a circuit diagram illustrating the configuration of a power conversion device according to a fourth embodiment.

[FIG. 8] FIG. 8 is a circuit diagram illustrating the configuration of a power conversion device according to a fifth embodiment.

[FIG. 9] FIG. 9 is a circuit diagram illustrating the configuration of a power conversion device according to a sixth embodiment.

[FIG. 10] FIG. 10 is a circuit diagram illustrating the configuration of a power conversion device according to a seventh embodiment.

DESCRIPTION OF EMBODIMENTS

A power conversion device according to several embodiments of the present invention will be described in detail below with reference to the drawings. The same or corresponding portions in the drawings of a power conversion device according to each embodiment are denoted by the same reference numerals, and descriptions thereof will be omitted.

(First Embodiment)

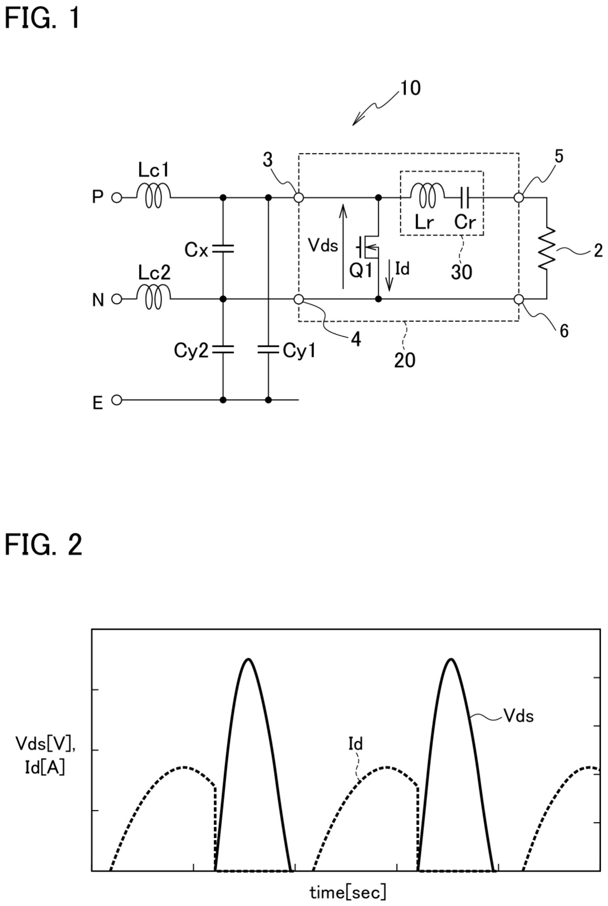

A first embodiment will be described with reference to FIGS. 1 to 4. FIG. 1 is a circuit diagram illustrating the configuration of a power conversion device 10 according to the first embodiment. The power conversion device 10 includes a first power supply terminal P and a second power supply terminal N, a first inductor Lc1 and a second inductor Lc2, an X capacitor Cx, a first Y capacitor Cy1 and a second Y capacitor Cy2, and a converter circuit 20. A DC power supply (not illustrated) is connected to the first power supply terminal P and the second power supply terminal N, for example. One end of the first inductor Lc1 is connected to the first power supply terminal P. One end of the second inductor Lc2 is connected to the second power supply terminal N.

The converter circuit 20 includes a first input terminal 3, a second input terminal 4, a switch Q1, a resonance circuit 30, a first output terminal 5, and a second output terminal 6. The other end of the first inductor Lc1 is connected to the first input terminal 3. The other end of the second inductor Lc2 is connected to the second input terminal 4. The switch Q1 is connected between the first input terminal 3 and the second input terminal 4. The switch Q1 is constituted by a semiconductor switching element such as an N-channel MOSFET, for example. The resonance circuit 30 is connected between one end of the switch Q1 and the first output terminal 5. The resonance circuit 30 is a series resonance circuit in which a resonance inductor Lr and a resonance capacitor Cr are connected in series. The other end of the switch Q1 is connected to the second output terminal 6. A load 2 is connected between the first output terminal 5 and the second output terminal 6.

The X capacitor Cx is connected between the first input terminal 3 and the second input terminal 4. The X capacitor Cx is used for reducing normal mode noise. The first Y capacitor Cy1 is connected between the first input terminal 3 and an earth E. The second Y capacitor Cy2 is connected between the second input terminal 4 and the earth E. The first Y capacitor Cy1 and the second Y capacitor Cy2 are used for bypassing common mode noise to the earth E. The first inductor Lc1, the second inductor Lc2, the X capacitor Cx, the first Y capacitor Cy1, and the second Y capacitor Cy2 are individually formed of components. However, components are not limited thereto, and the first Y capacitor Cy1 and the second Y capacitor Cy2 may be formed of the parasitic capacitance of the switch Q1, for example.

Further, the combined capacitance of the X capacitor Cx, the first Y capacitor Cy1, and the second Y capacitor Cy2 functions as shunt capacitors that are parts of the converter circuit 20. The converter circuit 20, the X capacitor Cx, the first Y capacitor Cy1, and the second Y capacitor Cy2 constitute a class-E inverter circuit. Then, the switch Q1 is turned on and off at a switching frequency fs corresponding to a resonance frequency of the resonance circuit 30. The switching frequency fs is generally a high frequency of several tens kHz to several MHz. Then, the power of the DC power supply input to the power supply terminals P and N is converted into the high frequency power of the switching frequency fs, and output to the output terminals 5 and 6. At this time, as illustrated in FIG. 2, when a voltage Vds at the both ends of the switch Q1 of the converter circuit 20 is zero, the switch Q1 is turned on, and it is possible to implement zero voltage switching such that a drain current Id flows to the switch Q1. This can implement low loss of the power conversion device 10.

Further, the first inductor Lc1 and the second inductor Lc2 as common mode choke coils, and the first Y capacitor Cy1 and the second Y capacitor Cy2 used for bypassing common mode noise to the earth E, function as filter circuits. More specifically, the first inductor Lc1 and the first Y capacitor Cy1 constitute a first filter circuit, and the second inductor Lc2 and the second Y capacitor Cy2 constitute a second filter circuit. When inductance values of the first inductor Lc1 and the second inductor Lc2 are assumed to be L, and capacitance values of the first Y capacitor Cy1 and the second Y capacitor Cy2 are assumed to be C, cutoff frequencies fc of the first filter circuit and the second filter circuit are expressed as (Formula 1).

$$fc = 1/2\pi\sqrt{(LC)} \quad \dots(\text{Formula 1})$$

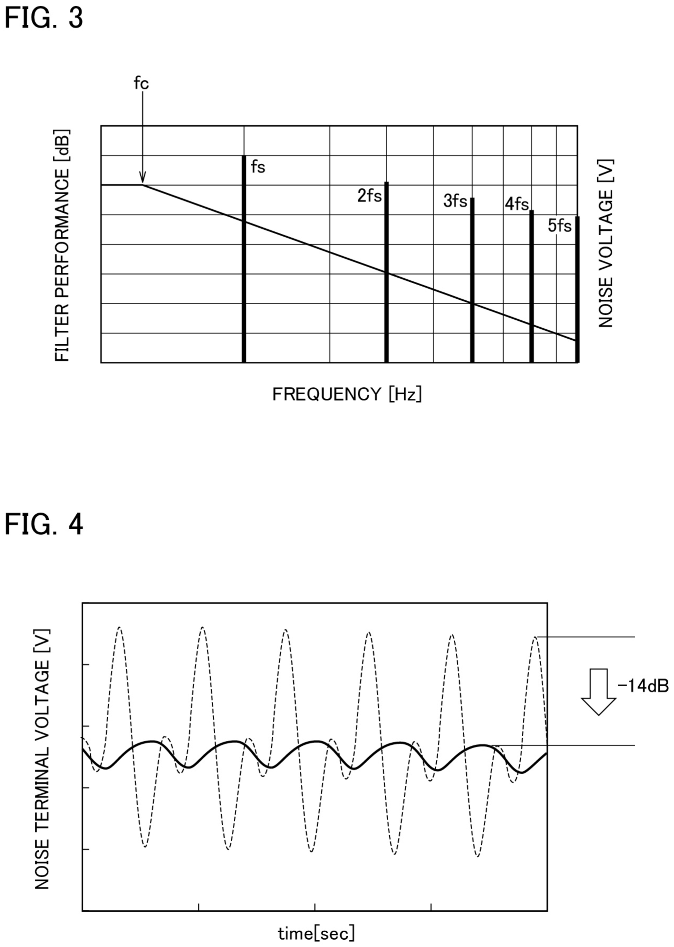

As illustrated in FIG. 3, an inductance value L and a capacitance value C are set, such that the cutoff frequencies fc of the first filter circuit and the second filter circuit are lower than the switching frequency fs, for example. Due to this kind of configuration, in the power conversion device 10, it is possible to suppress noise voltages of components of the switching frequency fs and harmonic frequencies 2 fs, 3 fs, and so forth thereof. Further, the present invention is not limited thereto, and the inductance value L and the capacitance value C may be set, such that the cutoff frequencies fc of the first filter circuit and the second filter circuit are lower than a predetermined harmonic frequency of the harmonic frequencies 2 fs, 3 fs, and so forth. In this case, it is possible to suppress a noise voltage of a component with a frequency higher than the predetermined harmonic frequency of the harmonic frequencies 2 fs, 3 fs, and so forth. The first inductor Lc1, the second inductor Lc2, the X capacitor Cx, the first Y capacitor Cy1, and the second Y capacitor Cy2 are individually formed of components. This can easily adjust values of the cutoff frequencies fc. Further, when the first Y capacitor Cy1 and the second Y capacitor Cy2 are formed of the parasitic capacitance of the switch Q1, the cost can be reduced by reducing the number of individual components.

FIG. 4 illustrates a simulation result (solid line) of a noise terminal voltage, when a line impedance stabilization network (LISN) is connected to the first power supply terminal P and the second power supply terminal N of the power conversion device 10. The power conversion device 10 is set, such that a cutoff frequency fc is lower than a switching frequency fs as illustrated in FIG. 3. Further, for comparison, FIG. 4 illustrates a simulation result (dashed line) of a noise terminal voltage, when an LISN is connected to a power conversion device of a conventional example illustrated in FIG. 1 of Patent Literature 1. Due to the power conversion device 10 being set, such that the cutoff frequency fc is lower than the switching frequency fs in this way, the power conversion device 10 according to the first embodiment can obtain an effect of suppressing 14 dB noise, compared to the power conversion device of the conventional example.

As a result, the power conversion device 10 according to the first embodiment can implement low loss due to zero voltage switching of the converter circuit 20, and can achieve reduction in size and cost of the device by reducing the number of stages of a noise filter.

(Second Embodiment)

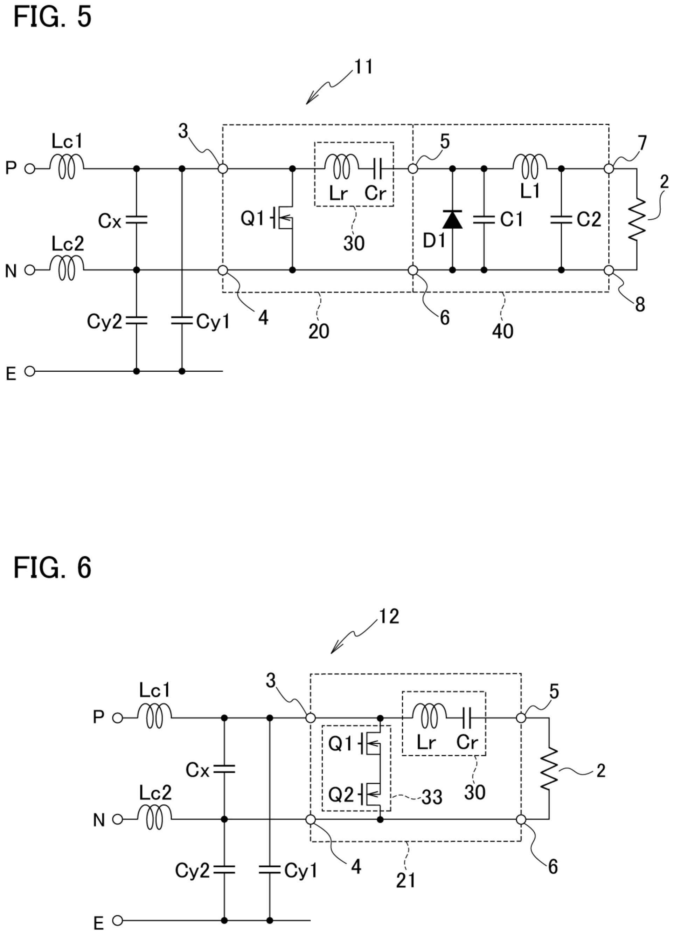

A second embodiment will be described with reference to FIG. 5. FIG. 5 is a circuit diagram illustrating the configuration of a power conversion device 11 according to the second embodiment. The power conversion device 11 differs from the power conversion device 10 according to the first embodiment in that, a rectifier circuit 40 is disposed at a rear stage of the converter circuit 20, and the load 2 is connected to a rear stage of the rectifier circuit 40. Configurations other than the above of the power conversion device 11 are the same as those of the power conversion device 10 according to the first embodiment. Therefore, descriptions of components other than the rectifier circuit 40 of the power conversion device 11 are omitted.

The rectifier circuit 40 rectifies a high-frequency current of the converter circuit 20, and is connected to the first output terminal 5 and the second output terminal 6 of the converter circuit 20. The rectifier circuit 40 includes a diode D1, a rectifying side shunt capacitor C1, an output choke inductor L1, an output capacitor C2, a third output terminal 7, and a fourth output terminal 8. The diode D1 is connected between the first output terminal 5 and the second output terminal 6. The rectifying side shunt capacitor C1 is connected in parallel to the diode D1. One end of the output choke inductor L1 is connected to one end of the rectifying side shunt capacitor C1. The output capacitor C2 is connected between the other end of the output choke inductor L1 and the other end of the rectifying side shunt capacitor C1. The third output terminal 7 is connected to one end of the output capacitor C2. The fourth output terminal 8 is connected to the other end of the output capacitor C2. The load 2 is connected between the third output terminal 7 and the fourth output terminal 8. The rectifier circuit 40 is arranged as what is referred to as a class-E rectifier.

Further, the cutoff frequencies fc of the first filter circuit constituted by the first inductor Lc1 and the first Y capacitor Cy1, and the second filter circuit constituted by the second inductor Lc2 and the second Y capacitor Cy2 are set in the same manner as those in the first embodiment. An effect of suppressing a noise voltage of the power conversion device 11 according to the second embodiment is the same as that of the power conversion device 10 according to the first embodiment.

Similarly to the power conversion device 10 according to the first embodiment, the power conversion device 11 according to the second embodiment can also implement low loss due to zero voltage switching of the converter circuit 20, and can achieve reduction in size and cost of the device by reducing the number of stages of a noise filter.

In addition, the same effect can be obtained, even if another rectifier circuit is used, such as what is referred to as a class-D rectifier circuit constituted by four bridge-connected diodes, instead of using the rectifier circuit 40.

(Third Embodiment)

A third embodiment will be described with reference to FIG. 6. FIG. 6 is a circuit diagram illustrating the configuration of a power conversion device 12 according to the third embodiment. The power conversion device 12 differs from the power conversion device 10 according to the first embodiment in that, a converter circuit 21 illustrated in FIG. 6 is used instead of the converter circuit 20 illustrated in FIG. 1. Further, a commercial AC power supply (not illustrated) of a low frequency of 50 Hz is connected to the first power supply terminal P and the second power supply terminal N of the power conversion device 12, for example. Configurations other than the above of the power conversion device 12 are the same as those of the power conversion device 10 according to the first embodiment, and therefore a detailed description thereof is omitted.

The converter circuit 21 illustrated in FIG. 6 includes the first input terminal 3, the second input terminal 4, a switch group 33 in which a first switch Q1 and a second switch Q2 are connected in series, the resonance circuit 30, the first output terminal 5, and the second output terminal 6. The switch group 33 in which the first switch Q1 and the second switch Q2 are connected in series, is connected between the first input terminal 3 and the second input terminal 4. The first switch Q1 and the second switch Q2 are constituted by semiconductor switching elements such as N-channel MOSFETs, for example. The switch group 33 may have a configuration in which three or more switches are connected in series. The resonance circuit 30 is connected between one end of the switch group 33 and the first output terminal 5. The resonance circuit 30 is a series resonance circuit in which the resonance inductor Lr and the resonance capacitor Cr are connected in series. The second output terminal 6 is connected to the other end of the switch group 33. The load 2 is connected between the first output terminal 5 and the second output terminal 6.

The combined capacitance of the X capacitor Cx, the first Y capacitor Cy1, and the second Y capacitor Cy2 functions as shunt capacitors that are parts of the converter circuit 21. The converter circuit 21, the X capacitor Cx, the first Y capacitor Cy1, and the second Y capacitor Cy2 constitute a class-E power factor improvement circuit.

Due to polarities of AC voltages input to the first input terminal 3 and the second input terminal 4, a switching operation is performed, in which one of the first switch Q1 and the second switch Q2 is turned on and off at a switching frequency fs corresponding to a resonance frequency of the resonance circuit 30. Further, the other of the first switch Q1 and the second switch Q2 is turned on and conducted. At this time, the one switch of the converter circuit 21 is subjected to zero voltage switching as illustrated in FIG. 2. When the polarities of the AC voltages are switched, the operations of the first switch Q1 and the second switch Q2 are also switched. Due to this kind of configuration, the operation as the power factor improvement circuit in the power conversion device 12 becomes possible.

Further, the cutoff frequencies fc of the first filter circuit constituted by the first inductor Lc1 and the first Y capacitor Cy1, and the second filter circuit constituted by the second inductor Lc2 and the second Y capacitor Cy2, are set in the same manner as those in the first embodiment. The third embodiment differs from the first embodiment in that, the AC power supply is connected to the first power supply terminal P and the second power supply terminal N, and the switch group 33 in which the first switch Q1 and the second switch Q2 are connected in series is used. However, an effect of suppressing a noise voltage in the third embodiment is the same as that in the first embodiment.

Similarly to the power conversion device 10 according to the first embodiment, the power conversion device 12 according to the third embodiment can also implement low loss due to zero voltage switching of the converter circuit 21, and can achieve reduction in size and cost of the device by reducing the number of stages of a noise filter.

(Fourth Embodiment)

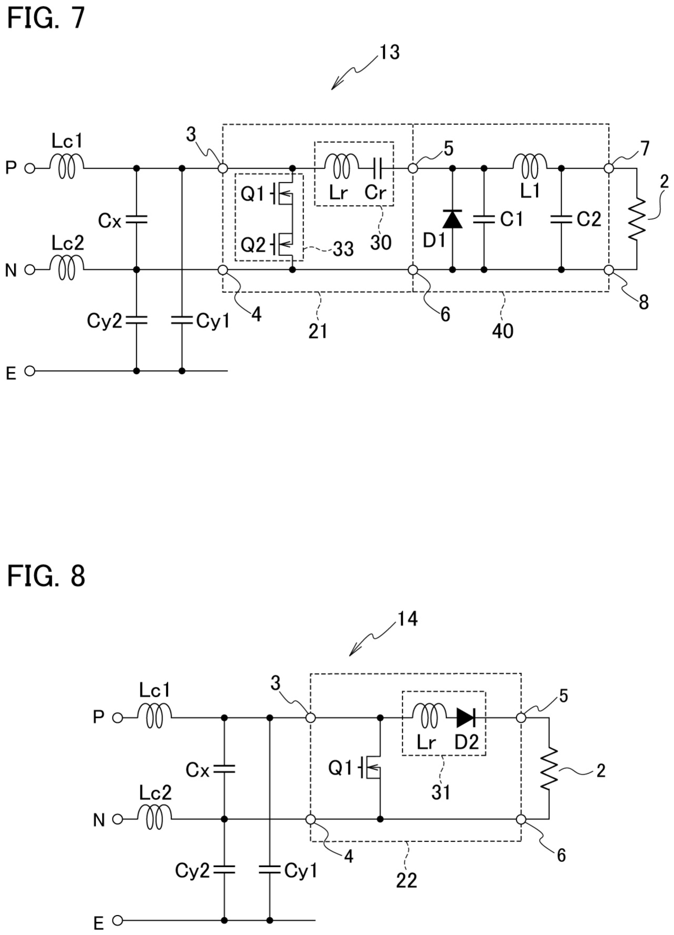

A fourth embodiment will be described with reference to FIG. 7. FIG. 7 is a circuit diagram illustrating the configuration of a power conversion device 13 according to the fourth embodiment. The power conversion device 13 differs from the power conversion device 12 according to the third embodiment in that, the rectifier circuit 40 similar to that in the second embodiment is arranged at a rear stage of the converter circuit 21, and the load 2 is connected to a rear stage of the rectifier circuit 40.

The cutoff frequencies fc of the first filter circuit constituted by the first inductor Lc1 and the first Y capacitor Cy1, and the second filter circuit constituted by the second inductor Lc2 and the second Y capacitor Cy2, are set in the same manner as those in the first embodiment. An effect of suppressing a noise voltage of the power conversion device 13 according to the fourth embodiment, is the same as that of the power conversion device 10 according to the first embodiment.

Similarly to the power conversion device 10 according to the first embodiment, the power conversion device 13 according to the fourth embodiment can also implement low loss due to zero voltage switching of the converter circuit 21, and can achieve reduction in size and cost of the device by reducing the number of stages of a noise filter.

In addition, the same effect can be obtained, even if another rectifier circuit is used, such as what is referred to as a class-D rectifier circuit constituted by four bridge-connected diodes, instead of using the rectifier circuit 40.

(Fifth Embodiment)

A fifth embodiment will be described with reference to FIG. 8. FIG. 8 is a circuit diagram illustrating the configuration of a power conversion device 14 according to the fifth embodiment. The power conversion device 14 differs from the power conversion device 10 according to the first embodiment in that, a converter circuit 22 illustrated in FIG. 8 is used instead of the converter circuit 20 illustrated in FIG. 1. Configurations other than the above of the power conversion device 14 are the same as those of the power conversion device 10 according to the first embodiment, and therefore a detailed description thereof is omitted.

The converter circuit 22 illustrated in FIG. 8 includes the first input terminal 3, the second input terminal 4, the switch Q1, a first series circuit 31 having the resonance inductor Lr and a first diode D2, the first output terminal 5, and the second output terminal 6.

The switch Q1 is connected between the first input terminal 3 and the second input terminal 4. The switch Q1 is constituted by a semiconductor switching element such as an N-channel MOSFET, for example. The first series circuit 31 is connected between one end of the switch Q1 and the first output terminal 5. The second output terminal 6 is connected to the other end of the switch Q1. The load 2 is connected between the first output terminal 5 and the second output terminal 6. Further, the combined capacitance of the X capacitor Cx, the first Y capacitor Cy1, and the second Y capacitor Cy2, which are connected in parallel to the switch Q1 functions as a resonance capacitor. The converter circuit 22, the X capacitor Cx, the first Y capacitor Cy1, and the second Y capacitor Cy2 constitute a voltage resonant booster chopper circuit. The switching frequency fs of the switch Q1 is set to have values corresponding to resonance frequencies of the resonance inductor Lr, and a resonance capacitor, which is the combined capacitance of the X capacitor Cx, the first Y capacitor Cy1, and the second Y capacitor Cy2. As a result, the switch Q1 of the converter circuit 22 is subjected to zero voltage switching as illustrated in FIG. 2.

Further, the cutoff frequencies fc of the first filter circuit constituted by the first inductor Lc1 and the first Y capacitor Cy1, and the second filter circuit constituted by the second inductor Lc2 and the second Y capacitor Cy2, are set in the same manner as those in the first embodiment. The power conversion device 14 according to the fifth embodiment differs from that in the first embodiment, in the configuration of the converter circuit 22. However, an effect of suppressing a noise voltage of the power conversion device 14 is the same as that of the power conversion device 10 according to the first embodiment.

Similarly to the power conversion device 10 according to the first embodiment, the power conversion device 14 according to the fifth embodiment can also implement low loss due to zero voltage switching of the converter circuit 22, and can achieve reduction in size and cost of the device by reducing the number of stages of a noise filter.

(Sixth Embodiment)

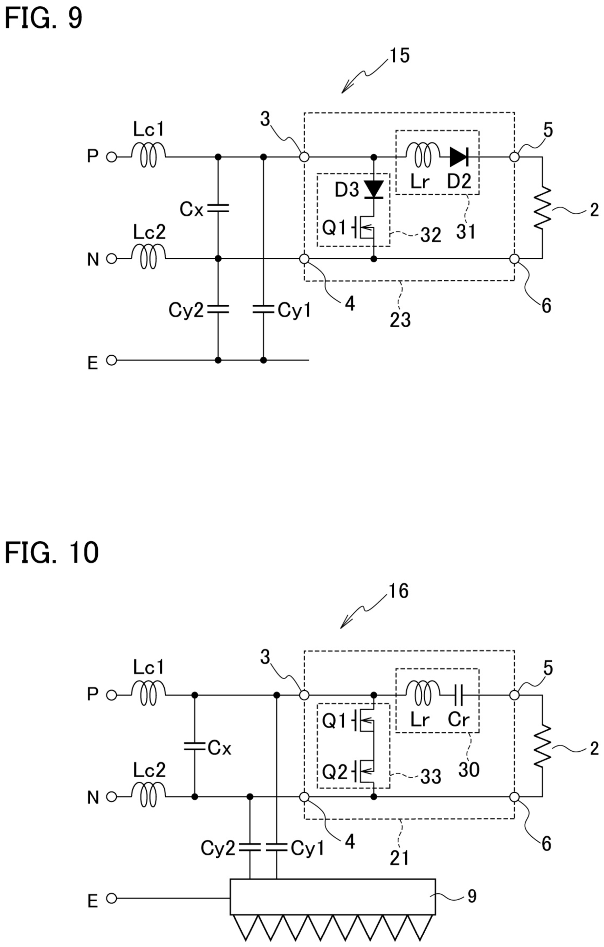

A sixth embodiment will be described with reference to FIG. 9. FIG. 9 is a circuit diagram illustrating the configuration of a power conversion device 15 according to the sixth embodiment. The power conversion device 15 differs from the power conversion device 14 illustrated in FIG. 8, in that the switch Q1 of the converter circuit 22 of the power conversion device 14 is replaced with a second series circuit 32 having a second diode D3 and the switch Q1 of a converter circuit 23. Configurations other than the above of the power conversion device 15 are the same as those of the power conversion device 14 according to the fifth embodiment.

That is, the converter circuit 23 illustrated in FIG. 9 includes the first input terminal 3, the second input terminal 4, the first series circuit 31 having the resonance inductor Lr and the first diode D2, the second series circuit 32 having the second diode D3 and the switch Q1, the first output terminal 5, and the second output terminal 6.

The second series circuit 32 having the second diode D3 and the switch Q1, is connected between the first input terminal 3 and the second input terminal 4. The switch Q1 is constituted by a semiconductor switching element such as an N-channel MOSFET, for example. The first series circuit 31 is connected between one end of the second series circuit 32 and the first output terminal 5. The second output terminal 6 is connected to the other end of the second series circuit 32. The load 2 is connected between the first output terminal 5 and the second output terminal 6. Further, the combined capacitance of the X capacitor Cx, the first Y capacitor Cy1, and the second Y capacitor Cy2, which are connected in parallel to the second series circuit 32, functions as a resonance capacitor. The converter circuit 23, the X capacitor Cx, the first Y capacitor Cy1, and the second Y capacitor Cy2 constitute a voltage resonant booster chopper circuit. The switching frequency fs of the switch Q1 is set to have values corresponding to resonance frequencies of the resonance inductor Lr, and a resonance capacitor, which is the combined capacitance of the X capacitor Cx, the first Y capacitor Cy1, and the second Y capacitor Cy2. As a result, the switch Q1 of the converter circuit 23 is subjected to zero voltage switching as illustrated in FIG. 2.

Further, the cutoff frequencies fc of the first filter circuit constituted by the first inductor Lc1 and the first Y capacitor Cy1, and the second filter circuit constituted by the second inductor Lc2 and the second Y capacitor Cy2, are set in the same manner as those in the first embodiment. The power conversion device 15 according to the sixth embodiment differs from that in the first embodiment, in the configuration of the converter circuit 23. However, an effect of suppressing a noise voltage of the power conversion device 15 is the same as that of the power conversion device 10 according to the first embodiment.

Similarly to the power conversion device 10 according to the first embodiment, the power conversion device 15 according to the sixth embodiment can also implement low loss due to zero voltage switching of the converter circuit 23, and can achieve reduction in size and cost of the device by reducing the number of stages of a noise filter.

(Seventh Embodiment)

A seventh embodiment will be described with reference to FIG. 10. FIG. 10 is a circuit diagram illustrating the configuration of a power conversion device 16 according to the seventh embodiment. The power conversion device 16 differs from the power conversion device 12 according to the third embodiment illustrated in FIG. 6 in that, a heat dissipation member 9 is used. Configurations other than the above of the power conversion device 16 are the same as those of the power conversion device 12 according to the third embodiment, and therefore a detailed description thereof is omitted.

In the power conversion device 16, the switch group 33 in which the first switch Q1 and the second switch Q2 are connected in series, is cooled using the conductive heat dissipation member 9. The heat dissipation member 9 is connected to the earth E.

In the power conversion device 16, in order to reduce the cost by reducing the number of individual components, instead of individual components, it may be possible to use the parasitic capacitance generated between the heat dissipation member 9, and the first switch Q1 and second switch Q2, as the first Y capacitor Cy1 and the second Y capacitor Cy2. In this case, the combined capacitance of the X capacitor Cx as an individual component, and the first Y capacitor Cy1 and the second Y capacitor Cy2 as the parasitic capacitance functions as a shunt capacitor which is a part of the converter circuit 21. The converter circuit 21, the X capacitor Cx, and the first Y capacitor Cy1 and second Y capacitor Cy2 as the parasitic capacitance constitute a class-E power factor improvement circuit.

Further, when the parasitic capacitance is used as the first Y capacitor Cy1 and the second Y capacitor Cy2, capacitance values C of the first Y capacitor Cy1 and the second Y capacitor Cy2 become smaller than when individual components are used. Therefore, the cutoff frequencies fc of the first filter circuit constituted by the first inductor Lc1 and the first Y capacitor Cy1, and the second filter circuit constituted by the second inductor Lc2 and the second Y capacitor Cy2, may not be lower than the switching frequency fs. However, even in this case, by setting the cutoff frequency fc to be lower than the predetermined harmonic frequency of the harmonic frequencies 2 fs, 3 fs, and so forth, it is possible to suppress a noise voltage of a component with a frequency higher than the predetermined harmonic frequency.

Similarly to the power conversion device 10 according to the first embodiment, the power conversion device 16 according to the seventh embodiment can also implement low loss due to zero voltage switching of the converter circuit 21, and can achieve reduction in size and cost of the device by reducing the number of stages of a noise filter.

Although several embodiments of the present invention have been described as above, it should not be understood that the statements and drawings which form part of this disclosure are intended to limit the invention. Various alternative embodiments, examples, and operating techniques will become apparent to those skilled in the art from this disclosure.

REFERENCE SIGNS LIST

| 2 | Load |
|---|---|
| 3 | First input terminal |
| 4 | Second input terminal |
| 5 | First output terminal |
| 6 | Second output terminal |
| 7 | Third output terminal |
| 8 | Fourth output terminal |
| 9 | Heat dissipation member |
| 10-16 | Power conversion device |
| 20-23 | Converter circuit |
| 30 | Resonance circuit |
| 31 | First series circuit |
| 32 | Second series circuit |
| 33 | Switch group |
| Cr | Resonance capacitor |
| Cx | X capacitor |
| Cy1 | First Y capacitor |
| Cy2 | Second Y capacitor |
| E | Earth |
| fc | Cutoff frequency |
| fs | Switching frequency |
| Lc1 | First inductor |
| Lc2 | Second inductor |

Lr    Resonance inductor

N    Second power supply terminal

P    First power supply terminal

Q1    Switch (first switch)

Q2    Second switch

**Claims**

1. A power conversion device, comprising:

   a first power supply terminal and a second power supply terminal;
   a first inductor having one end connected to the first power supply terminal, and a second inductor having one end connected to the second power supply terminal;
   a converter circuit including a first input terminal connected to the other end of the first inductor, a second input terminal connected to the other end of the second inductor, a switch connected between the first input terminal and the second input terminal, and a resonance circuit;
   an X capacitor connected between the first input terminal and the second input terminal; and
   a first Y capacitor connected between the first input terminal and an earth, and a second Y capacitor connected between the second input terminal and the earth, wherein
   a combined capacitance of the X capacitor, the first Y capacitor, and the second Y capacitor constitutes a part of the converter circuit,
   the first inductor and the first Y capacitor constitute a first filter circuit, and
   the second inductor and the second Y capacitor constitute a second filter circuit.

2. The power conversion device according to claim 1, wherein
   a cutoff frequency of the first filter circuit and a cutoff frequency of the second filter circuit are set to be lower than a switching frequency of the switch.

3. The power conversion device according to claim 1 or 2, wherein
   the converter circuit is a class-E inverter circuit including:

   the switch;
   the resonance circuit which is connected to one end of the switch and in which a resonance inductor and a resonance capacitor are connected in series; and
   a shunt capacitor that is the combined capacitance of the X capacitor, the first Y capacitor, and the second Y capacitor.

4. The power conversion device according to claim 1 or 2, wherein
   the converter circuit is a class-E power factor improvement circuit including:

   the switch in which at least two switching elements are connected in series;
   the resonance circuit which is connected to one end of the switch and in which a resonance inductor and a resonance capacitor are connected in series; and
   a shunt capacitor that is the combined capacitance of the X capacitor, the first Y capacitor, and the second Y capacitor.

5. The power conversion device according to claim 1 or 2, wherein
   the converter circuit is a voltage resonant booster chopper circuit including:

   the switch;
   a series circuit that is connected to one end of the switch and includes a resonance inductor and a diode; and
   a resonance capacitor that is the combined capacitance of the X capacitor, the first Y capacitor, and the second Y capacitor, wherein
   the resonance inductor and the resonance capacitor constitute the resonance circuit.

6. The power conversion device according to claim 1 or 2, wherein
   the converter circuit is a voltage resonant booster chopper circuit including:

   a first series circuit having a resonance inductor and a first diode;
   a second series circuit that has the switch and a second diode and is connected between the first input terminal and the second input terminal; and
   a resonance capacitor that is the combined capacitance of the X capacitor, the first Y capacitor, and the second Y capacitor, wherein
   one end of the first series circuit is connected to one end of the second series circuit, and
   the resonance inductor and the resonance capacitor constitute the resonance circuit.

7. The power conversion device according to any one of claims 1 to 6, wherein
   the first Y capacitor and the second Y capacitor are formed of individual components.

8. The power conversion device according to any one of claims 1 to 6, wherein

the first Y capacitor and the second Y capacitor are formed of parasitic capacitance of the switch.

# FIG. 1

# FIG. 2

FIG. 3

FIG. 4

FIG. 5

FIG. 6

EP 4 657 740 A1

FIG. 7

FIG. 8

## FIG. 9

## FIG. 10

## INTERNATIONAL SEARCH REPORT

| | International application No. |
|---|---|
| | **PCT/IB2023/000014** |

| | | |
|---|---|---|
| **A.** | **CLASSIFICATION OF SUBJECT MATTER** | |
| | *H02M 7/48*(2007.01)i; *H02M 3/155*(2006.01)i; *H02M 7/06*(2006.01)i | |
| | FI: H02M7/48 A; H02M7/06 E; H02M3/155 Q | |

According to International Patent Classification (IPC) or to both national classification and IPC

| | | |
|---|---|---|
| **B.** | **FIELDS SEARCHED** | |

Minimum documentation searched (classification system followed by classification symbols)

       H02M7/48; H02M3/155; H02M7/06

Documentation searched other than minimum documentation to the extent that such documents are included in the fields searched

       Published examined utility model applications of Japan 1922-1996
       Published unexamined utility model applications of Japan 1971-2023
       Registered utility model specifications of Japan 1996-2023
       Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | JP 2022-90384 A (IHI CORP.) 17 June 2022 (2022-06-17) | 1-7 |
| | paragraphs [0017]-[0062], fig. 1, 5 | |
| A | paragraphs [0017]-[0062], fig. 1, 5 | 8 |
| Y | WO 2019/202354 A1 (NISSAN MOTOR CO., LTD.) 24 October 2019 (2019-10-24) | 1-7 |
| | paragraphs [0010]-[0068], fig. 1 | |
| A | paragraphs [0010]-[0068], fig. 1 | 8 |
| Y | JP 2022-86784 A (TOYOHASHI UNIV. OF TECHNOLOGY) 09 June 2022 (2022-06-09) | 1-7 |
| | paragraphs [0028]-[0125], fig. 1 | |
| A | paragraphs [0028]-[0125], fig. 1 | 8 |
| Y | JP 2017-188976 A (MURATA MFG. CO., LTD.) 12 October 2017 (2017-10-12) | 1-7 |
| | fig. 1 | |
| A | fig. 1 | 8 |

✓ Further documents are listed in the continuation of Box C.      ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/IB2023/000014**

### C.    DOCUMENTS CONSIDERED TO BE RELEVANT

| Category* | Citation of document, with indication, where appropriate, of the relevant passages | Relevant to claim No. |
|---|---|---|
| Y | JP 2004-32938 A (MITSUBISHI ELECTRIC CORPORATION) 29 January 2004 (2004-01-29)<br>paragraph [0011], fig. 1, 2 | 2, 4, 5, 6 |
| A | paragraph [0011], fig. 1, 2 | 3, 7, 8 |

Form PCT/ISA/210 (second sheet) (January 2015)

**INTERNATIONAL SEARCH REPORT**
Information on patent family members

| International application No. |
| --- |
| **PCT/IB2023/000014** |

| Patent document cited in search report | | | Publication date (day/month/year) | Patent family member(s) | | | Publication date (day/month/year) |
| --- | --- | --- | --- | --- | --- | --- | --- |
| JP | 2022-90384 | A | 17 June 2022 | (Family: none) | | | |
| WO | 2019/202354 | A1 | 24 October 2019 | US | 2021/0159773 | A1 | |
| | | | | paragraphs [0021]-[0078], fig. 1 | | | |
| | | | | EP | 3783788 | A1 | |
| | | | | CN | 111989855 | A | |
| JP | 2022-86784 | A | 09 June 2022 | (Family: none) | | | |
| JP | 2017-188976 | A | 12 October 2017 | US | 2017/0288575 | A1 | |
| | | | | fig. 1 | | | |
| | | | | EP | 3229363 | A1 | |
| | | | | CN | 107404218 | A | |
| JP | 2004-32938 | A | 29 January 2004 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021145433 A